# EUROPEAN PATENT SPECIFICATION

(11) **EP 1 450 044 B1**
(45) Date of publication and mention of the grant of the patent: **17.12.2008**
(21) Application number: 04003657.6
(22) Date of filing: 18.02.2004
(51) Int. Cl.: F04B 39/12, F04B 39/14, F04C 29/00, H02K 11/04

(54) **Electric compressor and method of assembling the same**
Elektrischer Kompressor und dessen Zusammenbauverfahren
Compresseur électrique et son procédé d'assemblage

(30) Priority: 19.02.2003 JP 2003040546
(43) Date of publication of application: 25.08.2004
(73) Proprietor: KABUSHIKI KAISHA TOYOTA JIDOSHOKKI, Kariya-shi, Aichi-ken (JP)
(72) Inventor: Kimura, Kazuya, Kariya-shi Aichi-ken (JP); Sonobe, Masanori, Kariya-shi Aichi-ken (JP); Iwata, Kitaru, Kariya-shi Aichi-ken (JP)
(74) Representative: TBK-Patent

(56) References cited:
- DE-U1- 9 320 524
- US-A- 5 360 322
- US-A- 6 041 609
- US-A1- 2002 025 265

## Description

### BACKGROUND OF THE INVENTION

The present invention relates to an electric compressor used in, for example, a vehicle air conditioner and a method of assembling this electric compressor.

An electric compressor of this kind comprises an inverter for driving an electric motor, which is mounted on a surface of a compressor housing, and a circuit cover covering the inverter (see, for example, document JP 62-012471 U1). Specifically, the technique in this publication employs an assembly procedure of mounting the inverter on the surface of the compressor housing and then fixedly joining the circuit cover to the compressor housing to cover the inverter.

However, the inverter must be handled gently and carefully partly because electric parts and a circuit board have low impact resistance. Accordingly, in terms of the configuration and flow of a production line, the inverter is not compatible with the process of assembling the mechanical components of the electric compressor, with which process the mechanical components do not need to be handled as delicately as the inverter. Therefore, to carefully and reliably mount the inverter on the compressor housing, it is necessary to, for example, execute this process on a line separate from a line on which a process of assembling mechanism components is executed. However, in this case, the compressor housing, a large-sized component, must be moved between the lines. This requires much labor and time. Thus disadvantageously, the manufacturing costs of the electric compressor increase.

An electric compressor comprising the feature summarized in the preamble of claim 1 and a method of assembling an electric compressor comprising the feature summarized in the preamble of claim 10 are known from document US 2002/0025265 A. The electric compressor according to this document comprises a motor driving circuit which is encapsulated in an insulating body and is fixed on a surface of a partition wall of the compressor housing. A circuit cover attached to the outer surface of the compressor housing defines, together with the compressor housing, the accommodating space in which the motor driving circuit is accommodated. In assembling with known electric compressor, the motor driving circuit is fixed on the surface of the partition wall and thereby accommodated in the accommodating space before the circuit cover is joined to the compressor housing.

It is an object of the present invention to provide an improved electric compressor and a method of assembling an electric compressor. Moreover, it is an object of the present invention to provide an electric compressor that reduces manufacturing costs.

According to the invention, these objects are achieved by the electric compressor defined in claim 1 and by the method of assembling an electric compressor defined in claim 10.

Other aspects and advantages of the invention will become apparent from the following description, taken in conjunction with the accompanying drawings, illustrating by way of example the principles of the invention.

### BRIEF DESCRIPTION OF THE DRAWINGS

FIG. 1 is a vertical cross-sectional view of an electric compressor;
FIG. 2 is a side view of the electric compressor;
FIG. 3 is a cross-sectional view of FIG. 2 taken along line 1-1 in FIG. 2, wherein a rotary shaft and an electric motor are omitted;
FIG. 4 is an exploded view illustrating a method of assembling the electric compressor; and
FIG. 5 is an exploded view of an electric compressor showing a second embodiment.

### DETAILED DESCRIPTION OF THE PREFERRED EMBODIMENTS

An electric compressor and a method of assembling the electric compressor according to first and second embodiment of the present invention will now be described. The electric compressor constitutes a part of a refrigeration circuit of a vehicle air conditioner. In the second embodiment, description will be given only of a difference between the first embodiment and the second embodiment. The same or corresponding components are denoted by the same reference numerals, and their description is omitted.

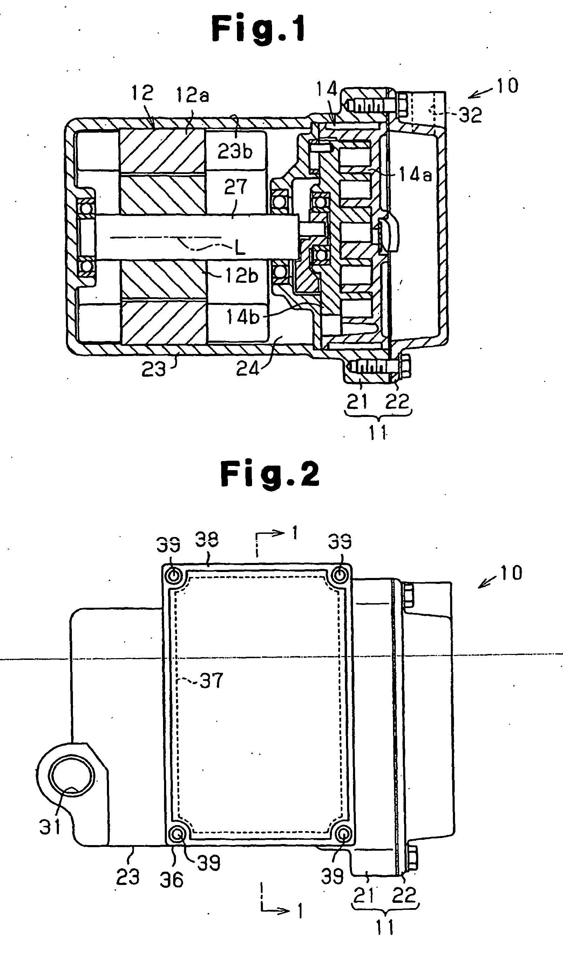

As shown in FIGS. 1 and 2, a compressor housing 11 constituting the contour of an electric compressor 10 according to the first embodiment is composed of a first housing member 21 and a second housing member 22. The first housing member 21 is shaped generally like a cylinder having a bottom formed on a left side of a peripheral wall 23, as viewed in the figures. The first housing member 21 is made by die casting an aluminum alloy. The second housing member 22 is shaped like a covered cylinder forming a cover on the right of the figures. The second housing member 22 is made by die casting an aluminum alloy. A closed space 24 is formed in the compressor housing 11 by fixedly joining the first housing member 21 and the second housing member 22 to each other.

As shown in FIG. 1, a rotary shaft 27 is rotatably supported by the first housing member 21 in the closed space 24 of the compressor housing 11. A rotation central axis L of the rotary shaft 27 constitutes a central axis L of the electric compressor 10. The peripheral wall 23 of the first housing member 21 is arranged so as to surround the central axis L of the electric compressor 10.

An electric motor 12 and a compression mechanism 14 are accommodated in the closed space 24 of the compressor housing 11. The electric motor 12 is composed of a stator 12a fixed to the inner surface of the peripheral wall 23 of the first housing member 21 and a rotor 12b provided inside the stator 12a and around the rotary shaft 27. The electric motor 12 rotates the rotary shaft 27 when the stator 12a receives a power supply.

The compression mechanism 14 is of a scroll type comprising a fixed scroll member 14a and a movable scroll member 14b. In the compression mechanism 14, the movable scroll member 14b orbits relative to the fixed scroll member 14a in response to rotation of the rotary shaft 27 to compress a refrigerant gas. Accordingly, when the compression mechanism 14 is driven by the electric motor 12, a low-temperature and low-pressure refrigerant gas from an external refrigerant circuit (not shown) is sucked into the compression mechanism 14 from a suction port 31 (see FIG. 2) formed in the first housing member 21, via the electric motor 12. The refrigerant gas sucked into the compression mechanism 14 is converted into a high-temperature and high-pressure refrigerant gas by a compressing action of the compression mechanism 14. The refrigerant gas is then discharged to the external refrigerant circuit through an exhaust port 32 formed in the second housing member 22.

The refrigerant gas from the external refrigerant circuit is introduced into the compression mechanism 14 via the electric motor 12 so that this relatively cool refrigerant gas cools the electric motor 12 and a motor driving circuit 41, described later.

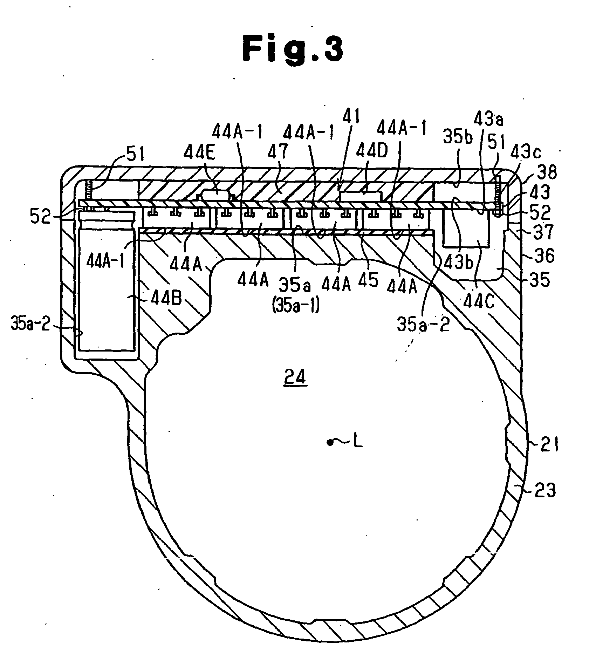

As shown in FIGS. 2 and 3, an accommodating section 36 containing an accommodating space 35 is projected from a part of the outer surface of the peripheral wall 23 of the first housing member 21. The accommodating section 36 is composed of a frame-like side wall portion 37 integrally extended from the outer surface of the peripheral wall 23 and a cover member 38. The cover member 38 is fixedly joined to an end surface of the side wall portion 37, and is separate from the compressor housing 11. The cover member 38 functions as a circuit cover. The cover member 38 is fixed to the side wall portion 37 at its four corners using bolts 39.

As shown in FIG. 3, a bottom surface 35a of the accommodating space 35 is constituted by the outer surface of the peripheral wall 23. Specifically, the bottom surface 35a of the accommodating space 35 is provided by the first housing member 21. A top surface 35b of the accommodating space 35 is provided by the cover member 38.

A motor driving circuit 41 for driving the electric motor 12 is accommodated in the accommodating space 35 of the accommodating section 36. The motor driving circuit 41 is composed of an inverter to supply power to the stator 12a of the electric motor 12 on the basis of an instruction from an air conditioner ECU (not shown).

The motor driving circuit 41 is composed of a planar circuit board 43 and plural types of electric components 44 mounted on a surface 43a of the circuit board 43 which is closer to the central axis L and on an opposite surface 43b. That is, the circuit board 43 has a first surface 43b facing the cover member 38 and a second surface 43a located on a side opposite from the cover member 38. The reference number 44 of these electric components generally refers to electric components 44A to 44E, described later, and other electric components not shown in the drawings.

The electric components 44 include well-known components constituting inverters, that is, switching elements 44A, an electrolytic capacitor 44B, a transformer 44C, a driver 44D, and a fixed resistor 44E. The driver 44D is an IC chip that intermittently controls the switching element 44A on the basis of instructions from the air conditioner ECU.

Only the electric components 44 that are lower than the switching elements 44A (provided that the switching elements 44A are arranged on the surface 43b) as measured from the circuit board 43 (from the surface 43b) are arranged on the surface 43b that is opposite the central axis L, i.e., closer to the cover member 38. The electric components 44 that are lower than the switching elements 44A as measured from the circuit board 43 include, for example, the driver 44D and the fixed resistor 44E.

The plurality of switching elements 44A and the electric components 44 that are higher than the switching elements 44A as measured from the circuit board 43 (from the surface 43a) are arranged on the surface 43a of the circuit board 43, which is closer to the central axis L, i.e. opposite the top surface 35b of the cover member 38. The electric components 44 that are higher than the switching elements 44A as measured from the circuit board 43 include, for example, the electrolytic capacitor 44B and the transformer 44C.

The low electric components such as the switching element 44A are arranged in a central portion of the surface 43a of the circuit board 43 which portion is close to the central axis L. The high electric capacitors such as the electrolytic capacitor 44B and the transformer 44C are arranged on both sides of the,central portion of the surface 43a of the circuit board 43 which asides are further from the central axis L.
This arrangement enables the motor driving circuit 41 to be installed in the compressor housing 11 so that the electric components 44 mounted on the surface 43a of the circuit board 43 extend along the cylindrical shape of the peripheral wall 23.

Accordingly, the motor driving circuit 41 can be arranged close to the central axis L of the electric compressor 10 because the electric components 44 extend along the cylindrical shape of the peripheral wall 23. Therefore, the amount of projection of the accommodating section 36 from the compressor housing 11 is reduced to miniaturize the electric compressor 10.

A central area 35a-1 of the bottom surface 35a of the accommodating space 35 corresponds to the switching elements 44A and is constructed as a plane that is close to the cover member 38 and parallel with the top surface 35b. Areas of the bottom surface 35a of the accommodating space 35 which are located at respective sides of the area 35a-1 correspond to the high electrolytic capacitor 44B and the transformer 44C. Concave portions 35a-2 are formed in these areas to accommodate the electrolytic capacitor 44B and the transformer 44C, respectively, such that clearance exists about each of the electrolytic capacitor 44b and the transformer 44C.

The motor driving circuit 41 is fixed in the accommodating space 35 because the vicinities of the switching elements 44A are tightened between the first housing member 21 and the cover member 38 due to the attachment of the cover member 38 to the first housing member 21. The tightening of the motor driving circuit 41 between the first housing member 21 (the bottom surface 35a of the accommodating space 35) and the cover member 38 (top surface 35b) causes the switching elements 44A of the circuit 41 to be pressed against the bottom surface 35a (area 35a-1) of the accommodating space 35 at a radiating surface 44A-1 of the switching element 44A.

Consequently, heat is efficiently exchanged between the switching elements 44A and the first housing member 21 (peripheral wall 23), which is relatively cool because a sucked refrigerant gas flows inside the peripheral wall 23. This allows heat to be appropriately radiated from the switching element 44A to stabilize operations of the motor driving circuit 41.

A circuit board support member 47 made of resin is mounted on the surface 43b of the circuit board 43, which is opposite the central axis L, so that all the electric components 44 mounted on the surface 43b are buried in the circuit board support member 47. Consequently, a load imposed on the switching element 44A by the pressing of the elements 44A against the bottom surface 35a of the accommodating space 35 is received by the cover member 38 via the circuit board 43 and the circuit board support member 47. Therefore, the flexure of the circuit board 43 near the switching elements 44A, which is caused by the above load, is prevented by direct backup support by the circuit board support member 47.

A rubber sheet (elastic member) 45 that is excellent in resilience and heat conductivity is interposed between the switching elements 44A and the bottom surface 35a of the accommodating space 35 (area 35a-1). That is, the switching elements 44A is pressed against and tightly contacted with the bottom surface 35a of the accommodating space 35 via the sheet 45.

Accordingly, even if, for example, a dimensional tolerance causes a variation in height from the circuit board 43 among the switching elements 44A, the elastic deformation of the sheet 45 absorbs a variation in the absolute height of each switching element 44A and a variation in relative height among the switching elements 44A. The switching elements 44A can thus be pressed against and tightly contacted with the first housing member 21 (the bottom surface 35a of the accommodating space 35) with an appropriate force. This allows the switching elements 44A to more appropriately radiate heat and also allows the motor driving circuit 41 to be stably arranged in the accommodating space 35.

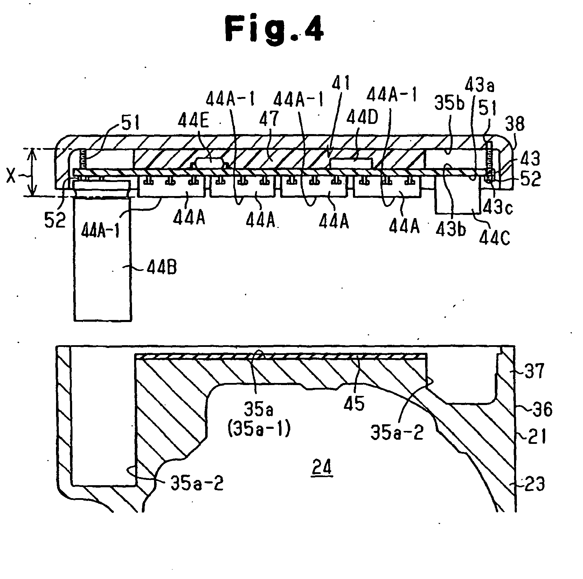

A plurality of bolts 51 are set in the top surface 35b (cover member 38) of the accommodating space 35 at intervals. A plurality of bolt through-holes 43c are formed through an outer peripheral potion of the circuit board 43 of the motor driving circuit 41 in association with the bolts 51 of the cover member 38. The bolts 51 are inserted through the respective bolt through-holes 43c in the circuit board 43. A nut 52 is attached to the tip of each bolt 51 to lock the motor driving circuit 41 on the cover member 38. That is, the motor driving circuit 41 is attached to the cover member 38 using the bolts 51 and the nuts 52. The motor driving circuit 41 is attached to the cover member 38 before the cover member 38 is fixedly joined to the first housing member 21 (see FIG. 4).

As is apparent from the drawings, the nuts 52, attached to the respective bolts 51, simply abut the motor driving circuit 41 against the cover member 38 so as to prevent the motor driving circuit 41 from coming off the bolts 51, i.e., coming off the cover member 38. However, the nuts 52 permit the motor driving circuit 41 to move close to the cover member 38 (top surface 35b). The structure attaching the motor driving circuit 41 to the cover member 38 using the bolts 51 and the nuts 52 does not hinder the vicinities of the switching elements 44A from being tightened directly between the first housing member 21 (bottom surface 35a) and the cover member 38 (top surface 35b).

As shown in FIG. 4, it is important to manage the distance X from the top surface 35b to the radiating surface 44A-1 in the cover member 38 (including the motor driving circuit 41) in order to suitably adjust a force that tightens the motor driving circuit 41 between the first housing member 21 and the cover member 38, that is, a force that presses the switching elements 44A against the bottom surface 35a. In the present embodiment, the distance X is set at a suitable value by adjusting the thickness of the circuit board support member 47 between the surface 43b of the circuit board 43 and the top surface 35b of the cover member 38. That is, the circuit board support member 47 functions as an adjusting member.

Specifically, before the cover member 38 is fixedly joined to the first housing member 21, the circuit board support member 47 is formed directly by depositing a resin on the surface 43b of the circuit board 43. The thickness of the circuit board support member 47 is adjusted by tightening the nuts 52 while the resin remains soft (its thickness can be varied) to compress the resin between the motor driving circuit 41 and the cover member 38, while allowing an excess amount of resin to escape to the side of the circuit board support member 47. Then, the resin hardens to determine the thickness of the circuit board support member 47, that is, to set the distance X at a suitable value. Then, the cover member 38 (including the motor driving circuit 41) is fixedly joined to the first housing member 21.

The present embodiment, configured as described above, has the following advantages.
(1) The motor driving circuit 41 is attached to the cover member 38. Consequently, an assembly procedure can be employed which attaches the motor driving circuit 41 to the cover member 38 and then fixedly joins the cover member 38 to the first housing member 21. The employment of this assembly procedure produces the following effects.
   Even if, for example, the motor driving circuit 41 is attached to the cover member 38 on a line separate from a line on which the cover member 38 is fixedly joined to the first housing member 21, the cover member 38 (including the motor driving circuit 41), which is smaller than the first housing member 21, can be easily moved between the lines.
   Furthermore, the motor driving circuit 41 is reinforced by the cover member 38. Accordingly, even when the cover member 38 is fixedly joined to the first housing member 21, it is unnecessary to give special considerations as required if for example, only the motor driving circuit 41 is handled. Consequently, the process of fixedly joining the cover member 38 to the first housing member 21 can be easily incorporated into an assembly line for the mechanism parts of the electric compressor 10. Therefore, the manufacturing costs of the electric compressor can be reduced compared to the technique in the utility model publication in the prior art section.
(2) The switching elements 44A are pressed against the first housing member 21 by tightening the motor driving circuit 41 between the first housing member 21 and the cover member 38 in the accommodating space 35 on the basis of the fixed joining of the cover member 38 to the first housing member 21. Consequently, it is unnecessary to attach the switching elements directly to the compressor housing by bolting or,the like in order to allow the switching elements to more appropriately radiate heat, as described in, for example, the document JP-62-012471 U1 considered in the prior art section. This makes it possible to attach the motor driving circuit 41 to the cover member 38. Therefore, the above assembly procedure can be employed, which attaches the motor driving circuit 41 to the cover member 38 and then fixedly joins the cover member 38 to the first housing member 21.

Specifically, according to the present embodiment, it is possible to reduce the manufacturing costs of the electric compressor 10 employing the above assembly procedure and to allow the switching elements 44A to more appropriately radiate heat by tightly contacting the switching elements 44A with the compressor housing 11.

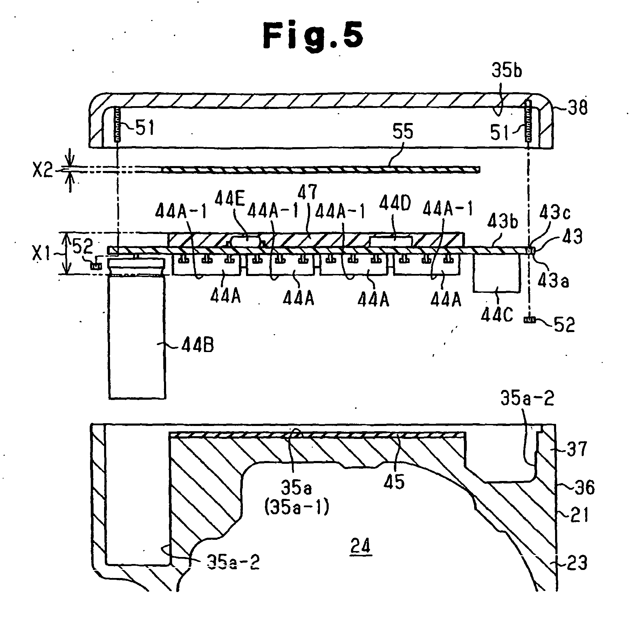

FIG. 5 shows the second embodiment. In the present embodiment, a spacer 55 is interposed between the cover member 38 (top surface 35b) and the circuit board support member 47. The distance X of the cover member 38 (including the motor driving circuit 41) is adjusted to a suitable value by adjusting the thickness of the spacer 55 rather than the thickness of the circuit board support member 47.

In the present embodiment, first, before the attachment of the motor driving circuit 41 to the cover member 38, the thickness X1 of the vicinities of the switching elements 44A of the motor driving circuit 41 is measured. The thickness X1 of the vicinities of the switching elements 44A of the motor driving circuit 41 is the distance between the top surface (the top surface in the figure) of the circuit board support member 47 and the radiating surfaces 44A-1 of the switching elements 44A. Then, the spacer 55, the thickness X2 of which corresponds to the difference between the measured value X1 and the preset suitable value of the distance X, is selected from spacers having plural values of thickness. Then, the selected spacer 55 is interposed between the motor driving circuit 41 (circuit board support member 47) and the cover member 38 (the top surface 35b of the accommodating space 35).

The selection of the thickness X2 of the spacer 55 need not necessarily meet the equation "(the suitable value of the distance X) - X1 = X2". Any similar value may be used and a slight error is tolerated. That is, even if the selected spacer 55 has a thickness X2 that does not meet the above equation, this error is absorbed by the elastic deformation of the sheet 45 to some degree.

The present embodiment has advantages similar to those of the first embodiment. Furthermore, the distance X of the cover member 38 (including the motor driving circuit 41) is adjusted to the suitable value by selecting the spacer 55 to have one of the already provided plural values of thickness. This eliminates the need for a cumbersome operation of fine-tuning the thickness of a soft resin of the circuit board support member 47 at the site where the electric compressor 10 is assembled as in the case of the above described first embodiment. Moreover, the time required to wait for the resin to harden can be saved to reduce the time required to adjust the distance X.

The invention may be embodied in the following forms.

In the above embodiments, the bolts 51 and nuts 52 are used to attach the motor driving circuit 41 to the cover member 38. However, the present invention is not limited to this aspect. The motor driving circuit 41 may be attached to the cover member 38 using snap engagement, an adhesive, a band, or the like.

In the above embodiments, the electric compressor 10 is embodied as what is called a fully electric compressor in which the electric motor 12 is the only driving source for the compression mechanism 14. However, the electric compressor 10 may be embodied as, for example, what is called a hybrid compressor in which an engine that is a driving source for the vehicle is used as another driving source for the compression mechanism 14.

The compression mechanism 14 is not limited to a scroll type. It may be of, for example, a piston type, a vane type, or a helical type.

The present examples and embodiments are to be considered as illustrative and not restrictive and the invention is not to be limited to the details given herein, but may be modified within the scope of the appended claims.

## Claims

1. An electric compressor, comprising:
a compressor housing (11);
a gas compression mechanism (14) accommodated in the compressor housing (11);
an electric motor (12) that drives the compression mechanism (14);
a motor driving circuit (41) that drives the electric motor (12), and
a circuit cover (38) attached to an outer surface of the compressor housing (11), wherein the compressor housing (11) and the circuit cover (38) define an accommodating space (35) accommodating the motor driving circuit (41),
wherein the motor driving circuit (41) includes a circuit board (43) and a switching element (44A), the circuit board (43) having a first surface (43b) facing the circuit cover (38) and a second surface (43a) located on a side opposite from the circuit cover (38),
the compressor being **characterized in that**
the motor driving circuit (41) is attached to the circuit cover (38),
the switching element (44A) is mounted on the second surface (43a) of the circuit board (43), and
the motor driving circuit (41) is held between the compressor housing (44) and the circuit cover (38) so that the switching element (44A) is pressed against the compressor housing (11).

2. The compressor according to claim 1, **characterized in that** a fastener (51, 52) for attaching the motor driving circuit (41) to the circuit cover (38) is attached to the circuit cover (38), wherein the fastener (51, 52) prevents the motor driving circuit from being detached from the circuit cover (38), and permits the motor driving circuit (41) to move toward the circuit cover (38).

3. The compressor according to claim 2, **characterized in that** the fastener (51, 52) includes a bolt (51) and a nut (52) wherein the bolt (51) is inserted through the motor driving circuit (41) with a proximal end of the bolt (51) fixed to the circuit cover (38), and the nut (52) is threaded to a distal end of the bolt (51).

4. The compressor according to any one of claims 1 to 3, **characterized in that** an adjusting member (47, 55) is arranged between the circuit cover (38) and the circuit board (43), and wherein the adjusting member (47, 55) adjusts a force with which the switching element (44A) is pressed against the compressor housing (11).

5. The compressor according to claim 4, **characterized in that** the adjusting member (47, 55) includes a circuit board support member (47), and wherein the circuit board support member (47) is located on a part of the first surface (43b) of the circuit board (43) that corresponds to the switching element (44A).

6. The compressor.according to claim 7, **characterized in that** the circuit board support member (47) is made of resin.

7. The compressor according to any one of claims 4 to 6, **characterized in that** the adjusting member (47, 55) includes a spacer (55) arranged between the circuit cover (38) and the circuit board (43).

8. The compressor according to claim 7, **characterized in that** the spacer (55) is a selected one of a plurality of spacers that have been prepared in advance, wherein the spacers have different thicknesses.

9. The compressor according to any one of claims 1 to 8, **characterized in that** an elastic member is arranged between the compressor housing and the switching element.

10. A method of assembling an electric compressor, the electric compressor comprising:
a compressor housing (11);
a gas compression mechanism (14) accommodated in the compressor housing (11);
an electric motor (12) that drives the compression mechanism (14);
a motor driving circuit (41) that drives the electric motor (12) and includes a circuit board (43) and a switching element (44A), the circuit board (43) having a first surface (43b) and a second surface (43a) located on a side opposite to the first surface (43b), and
a circuit cover (38), wherein the compressor housing (11) and the circuit cover (38) define an accommodating space (35),
the method comprising
a step of mounting the switching element (44A) on the second surface (43a) of the circuit board (43),
a step of accommodating the motor driving circuit (41) in the accommodating space (35), and
a step of joining the circuit cover (38) to the outer surface of the compressor housing (11),
the method being **characterized by**
a step of attaching the motor driving circuit (41) to the circuit cover (38) with the first surface (43b) of the circuit board (43) facing the circuit cover (38),
wherein the step of accommodating the motor driving circuit (41) in the accommodating space (35) is performed by the step of joining the circuit cover (38), to which the motor driving circuit (41) is attached, to the outer surface of the compressor housing (11) such that the motor driving circuit (41) is held between the compressor housing (11) and the circuit cover (38), and
wherein the step of joining the circuit cover (38) to the compressor housing (11) includes pressing the switching element (44A) against the compressor housing (11).

11. The assembling method according to claim 12, **characterized in that** the step of attaching the motor driving circuit (41) to the circuit cover (38) includes attaching the motor driving circuit (41) to the circuit cover (38) with a fastener (51, 52) such that the motor driving circuit (41) is prevented from being detached from the circuit cover (38), and permitted to move toward the circuit cover (38).

12. The assembling method according to claim 10 or 11, **characterized by** further comprising a step of arranging a circuit board support member (47) between the circuit cover (38) and the circuit board (43) to adjust a force with which the switching element (44A) is pressed against the compressor housing (11).

13. The assembling method according to claim 12, wherein the circuit board support member (47) is made of resin, **characterized in that** the step of arranging the circuit board support member (47) comprises
providing the resin for the circuit board support member (47) between the circuit cover (38) and the circuit board (43) before the resin is hardened; and
attaching the circuit board (43) to the circuit cover (38) while the resin remains soft such that the thickness of the circuit board support member (47) between the circuit cover (38) and the circuit board (43) is adjusted.

14. The assembling method according to claim 12 or 13, **characterized in that** the step of arranging the circuit board support member (47) includes arranging a spacer (55) between the circuit cover (38) and the circuit board (43), wherein the spacer (55) is selected from a plurality of spacers having different thicknesses.

## Patentansprüche

1. Elektrischer Kompressor mit:
einem Kompressorgehäuse (11);
einem Gaskompressionsmechanismus (14), der in dem Kompressorgehäuse (11) aufgenommen ist;
einem elektrischen Motor (12), der den Kompressionsmechanismus (14) antreibt;
einem Motorantriebsschaltkreis (41), der den elektrischen Motor (12) antreibt, und
einer Schaltkreisabdeckung (38), die an einer äußeren Fläche des Kompressorgehäuses (11) angebracht ist, wobei das Kompressorgehäuse (11) und die Schaltkreisabdeckung (38) einen Aufnahmeraum (35) definieren, der den Motorantriebsschaltkreis (41) aufnimmt,
wobei der Motorantriebsschaltkreis (41) eine Leiterplatte (43) und ein Umschaltelement (44A) hat, wobei die Leiterplatte (43) eine erste Fläche (43b), die der Schaltkreisabdeckung (38) zugewandt ist, und eine zweite Fläche (43a) hat, die sich auf einer zu der Schaltkreisabdeckung (38) entgegengesetzten Seite befindet,
wobei der Kompressor
**dadurch gekennzeichnet ist, dass**
der Motorantriebsschaltkreis (41) an der Schaltkreisabdeckung (38) angebracht ist,
das Umschaltelement (44A) an der zweiten Fläche (34a) der Leiterplatte (34) montiert ist, und
der Motorantriebsschaltkreis (41) zwischen dem Kompressorgehäuse (11) und der Schaltkreisabdeckung (38) gehalten ist, so dass das Umschaltelement (44A) gegen das Kompressorgehäuse (11) gepresst ist.

2. Kompressor nach Anspruch 1, **dadurch gekennzeichnet, dass** ein Befestigungsmittel (51, 52) zum Befestigen des Motorantriebsschaltkreises (41) an die Schaltkreisabdeckung (38) an der Schaltkreisabdeckung (38) angebracht ist, wobei das Befestigungsmittel (51, 52) den Motorantriebsschaltkreis davon abhält, von der Schaltkreisabdeckung (38) gelöst zu werden, und dem Motorantriebsschaltkreis (41) gestattet, sich zu der Schaltkreisabdeckung (38) hin zu bewegen.

3. Kompressor nach Anspruch 2, **dadurch gekennzeichnet, dass** das Befestigungsmittel (51, 52) eine Schraube (51) und eine Mutter (52) aufweist, wobei die Schraube (51) mit einem proximalen Ende der Schraube (51), die an der Schaltkreisabdeckung (38) befestigt ist, durch den Motorantriebsschaltkreis (41) eingefügt ist, und die Mutter (52) an ein distales Ende der Schraube (51) geschraubt ist.

4. Kompressor nach einem der Ansprüche 1 bis 3, **dadurch gekennzeichnet, dass** ein Einstellbauteil (47, 55) zwischen der Schaltkreisabdeckung (38) und der Leiterplatte (43) angeordnet ist, und wobei das Einstellbauteil (47, 55) eine Kraft einstellt, mit der das Umschaltelement (44A) gegen das Kompressorgehäuse (11) gepresst ist.

5. Kompressor nach Anspruch 4, **dadurch gekennzeichnet, dass** das Einstellbauteil (47, 55) ein Leiterplattenabstützbauteil (47) aufweist, und wobei sich das Leiterplattenabstützbauteil (47) an einem Teil der ersten Fläche (43b) der Leiterplatte (43) befindet, die dem Umschaltelement (44A) entspricht.

6. Kompressor nach Anspruch 7, **dadurch gekennzeichnet, dass** das Leiterplattenabstützbauteil (47) aus Harz hergestellt ist.

7. Kompressor nach einem der Ansprüche 4 bis 6, **dadurch gekennzeichnet, dass** das Einstellbauteil (47, 55) einen Abstandhalter (55) aufweist, der zwischen der Schaltkreisabdeckung (38) und der Leiterplatte (43) angeordnet ist.

8. Kompressor nach Anspruch 7, **dadurch gekennzeichnet, dass** der Abstandhalter (55) ein Ausgewählter aus einer Vielzahl von Abstandhaltern ist, die vorab bereitgestellt wurden, wobei die Abstandhalter unterschiedliche Dicken aufweisen.

9. Kompressor nach einem der Ansprüche 1 bis 8, **dadurch gekennzeichnet, dass** ein elastisches Bauteil zwischen dem Kompressorgehäuse und dem Umschaltelement angeordnet ist.

10. Verfahren zum Zusammenbauen eines elektrischen Kompressors, wobei der elektrische Kompressor Folgendes aufweist:
ein Kompressorgehäuse (11);
einen Gaskompressionsmechanismus (14), der in dem Kompressorgehäuse (11) aufgenommen ist;
einen elektrischen Motor (12), der den Kompressionsmechanismus (14) antreibt;
einen Motorantriebsschaltkreis (41), der den elektrischen Motor (12) antreibt und eine Leiterplatte (43) und ein Umschaltelement (44A) aufweist, wobei die Leiterplatte (43) eine erste Fläche (43b) und eine zweite Fläche (43a) hat, die sich auf einer zu der ersten Fläche (43b) entgegengesetzten Seite befindet, und
eine Schaltkreisabdeckung (38), wobei das Kompressorgehäuse (11) und die Schaltkreisabdeckung (38) einen Aufnahmeraum (35) definieren,
wobei das Verfahren Folgendes aufweist:
einen Schritt des Montierens des Umschaltelements (44A) auf der zweiten Fläche (43a) der Leiterplatte (43),
einen Schritt des Aufnehmens des Motorantriebsschaltkreises (41) in dem Aufnahmeraum (35), und
einen Schritt des Verbindens der Schaltkreisabdeckung (38) mit der Außenfläche des Kompressorgehäuses (11),
wobei das Verfahren **gekennzeichnet ist durch**
einen Schritt des Anbringens des Motorantriebsschaltkreises (41) an der Schaltkreisabdeckung (38) mit der ersten Fläche (38b) der Leiterplatte (43), die der Schaltkreisabdeckung (38) zugewandt ist,
wobei der Schritt des Aufnehmens des Motorantriebsschaltkreises (41) in dem Aufnahmeraum (35) durch den Schritt des Verbindens der Schaltkreisabdeckung (38), an der der Motorantriebsschaltkreis (41) angebracht wird, mit der Außenfläche des Kompressorgehäuses (11) ausgeführt wird, so dass der Motorantriebsschaltkreis (41) zwischen dem Kompressorgehäuse (11) und der Schaltkreisabdeckung (38) gehalten wird, und
wobei der Schritt des Verbindens der Schaltkreisabdeckung (38) mit dem Kompressorgehäuse (11) ein Pressen des Umschaltelements (44A) gegen das Kompressorgehäuse (11) aufweist.

11. Zusammenbauverfahren nach Anspruch 10, **dadurch gekennzeichnet, dass** der Schritt des Anbringens des Motorantriebsschaltkreises (41) an der Schaltkreisabdeckung (38) ein Anbringen des Motorantriebsschaltkreises (41) an der Schaltkreisabdeckung (38) mit einem Befestigungsmittel (51, 52) aufweist, so dass der Motorantriebsschaltkreis (41) davon abgehalten wird, von der Schaltkreisabdeckung (38) gelöst zu werden, und ihm gestattet, sich zu der Schaltkreisabdeckung (38) hin zu bewegen.

12. Zusammenbauverfahren nach Anspruch 10 oder 11, **gekennzeichnet durch** ein weiteres Aufweisen eines weiteren Schritts des Anordnens eines Leiterplattenabstützbauteils (47) zwischen der Schaltkreisabdeckung (38) und der Leiterplatte (43), um eine Kraft einzustellen, mit der das Umschaltelement (44A) gegen das Kompressorgehäuse (11) gepresst wird.

13. Zusammenbauverfahren nach Anspruch 12, wobei das Leiterplattenabstützbauteil (47) aus Harz hergestellt ist,
**dadurch gekennzeichnet, dass**
der Schritt des Anordnens des Leiterplattenabstützbauteils (47) ein Vorsehen des Harzes für das Leiterplattenabstützbauteil (47) zwischen der Schaltkreisabdeckung (38) und der Leiterplatte (43) aufweist, bevor das Harz gehärtet wird, und durch
ein Befestigen der Leiterplatte (43) an der Schaltkreisabdeckung (38), während das Harz weich bleibt, so dass die Dicke des Leiterplattenabstützbauteils (47) zwischen der Schaltkreisabdeckung (38) und der Leiterplatte (43) eingestellt wird.

14. Zusammenbauverfahren nach Anspruch 12 oder 13, **dadurch gekennzeichnet, dass** der Schritt des Anordnens des Leiterplattenabstützbauteils (47) ein Anordnen eines Abstandhalters (55) zwischen der Schaltkreisabdeckung (38) und der Leiterplatte (43) aufweist, wobei der Abstandhalter (55) ein Ausgewählter aus einer Vielzahl von Abstandhaltern ist, die unterschiedliche Dicken aufweisen.

## Revendications

1. Compresseur électrique, comprenant :
un boîtier de compresseur (11) ;
un mécanisme de compression de gaz (14) logé dans un boîtier de compresseur (11) ;
un moteur électrique (12) qui entraîne le mécanisme de compression (14) ;
un circuit d'entraînement du moteur (41) qui entraîne le moteur électrique (12), et
un couvercle de circuit (38) fixé sur une surface extérieure du boîtier de compresseur (11), dans lequel le boîtier de compresseur (11) et le couvercle de circuit (38) définissent un espace de logement (35) pour loger le circuit d'entraînement du moteur (41),
dans lequel le circuit d'entraînement du moteur (41) inclut une carte de circuit imprimé (43) et un élément commutateur (44A), la carte de circuit imprimé (43) ayant une première surface (43b) faisant face au couvercle de circuit (38) et une seconde surface (43a) située sur un côté opposé au couvercle de circuit (38),
le compresseur étant **caractérisé en ce que**
le circuit d'entraînement du moteur (41) est fixé sur le couvercle de circuit (38),
l'élément commutateur (44A) est monté sur la seconde surface (43a) de la carte de circuit imprimé (43), et
le circuit d'entraînement du moteur (41) est retenu entre le boîtier du compresseur (44) et le couvercle de circuit (38), de telle sorte que l'élément commutateur (44A) appuie contre le boîtier du compresseur (11).

2. Compresseur selon la revendication 1, **caractérisé en ce qu'**une attache (51, 52) permettant d'attacher le circuit d'entraînement du moteur (41) sur le couvercle de circuit (38) est fixée sur le couvercle de circuit (38), dans lequel l'attache (51, 52) empêche le circuit d'entraînement du moteur de se détacher du couvercle de circuit (38) et permet au circuit d'entraînement du moteur (41) de se déplacer vers le couvercle de circuit (38).

3. Compresseur selon la revendication 2, **caractérisé en ce que** l'attache (51, 52) inclut un boulon (51) et un écrou (52) dans lequel le boulon (51) est inséré à travers le circuit d'entraînement du moteur (41), une extrémité proximale du boulon (51) étant fixée sur le couvercle de circuit (38), et l'écrou (52) étant fileté sur une extrémité distale du boulon (51).

4. Compresseur selon l'une quelconque des revendications 1 à 3, **caractérisé en ce qu'**un élément de réglage (47, 55) est agencé entre le couvercle de circuit (38) et la carte de circuit imprimé (43), et dans lequel l'élément de réglage (47, 55) règle une force avec laquelle l'élément commutateur (44A) appuie contre le boîtier du compresseur (11).

5. Compresseur selon la revendication 4, **caractérisé en ce que** l'élément de réglage (41, 55) inclut un élément de support de la carte de circuit imprimé (47) et dans lequel l'élément de support de la carte de circuit imprimé (47) est situé sur une partie de la première surface (43b) de la carte de circuit imprimé (43) qui correspond à l'élément commutateur (44A).

6. Compresseur selon la revendication 7, **caractérisé en ce que** l'élément de support de la carte de circuit imprimé (47) est composé de résine.

7. Compresseur selon l'une quelconque des revendications 4 à 6, **caractérisé en ce que** l'élément de réglage (47, 55) inclut une entretoise (55) agencée entre le couvercle de circuit (38) et la carte de circuit imprimé (43).

8. Compresseur selon la revendication 7, **caractérisé en ce que** l'entretoise (55) est l'une choisie parmi une pluralité d'entretoises qui ont été préparées à l'avance, dans lequel les entretoises ont des épaisseurs différentes.

9. Compresseur selon l'une quelconque des revendications 1 à 8, **caractérisé en ce qu'**un élément élastique est agencé entre le boîtier du compresseur et l'élément commutateur.

10. Procédé d'assemblage d'un compresseur électrique, le compresseur électrique comprenant :
un boîtier de compresseur (11) ;
un mécanisme de compression de gaz (14) logé dans le boîtier de compresseur (11) ;
un moteur électrique (12) qui entraîne le mécanisme de compression (14) ;
un circuit d'entraînement du moteur (41) qui entraîne le moteur électrique (12) et inclut une carte de circuit imprimé (43) et un élément commutateur (44A), la carte de circuit imprimé (43) ayant une première surface (43b) et une seconde surface (43a) située sur un côté opposé à la première surface (43b), et
un couvercle de circuit (38), dans lequel le boîtier de compresseur (11) et le couvercle de circuit (38) définissent un espace de logement (35),
le procédé comprenant
une étape de montage de l'élément commutateur (44A) sur la seconde surface (43a) de la carte de circuit imprimé (43),
une étape de logement du circuit d'entraînement du moteur (41) dans l'espace de logement (35), et
une étape de réunion du couvercle de circuit (38) à la surface extérieure du boîtier de compresseur (11),
le procédé étant **caractérisé par**
une étape de fixation du circuit d'entraînement du moteur (41) sur le couvercle de circuit (38), la première surface (43b) de la carte de circuit imprimé (43) faisant face au couvercle de circuit (38),
dans lequel l'étape de logement du circuit d'entraînement du moteur (41) dans l'espace de logement (35) est exécutée par l'étape de réunion du couvercle de circuit (38), auquel le circuit d'entraînement du moteur (41) est fixé, sur la surface extérieure du boîtier du compresseur (11) de telle sorte que le circuit d'entraînement du moteur (41) est retenu entre le boîtier du compresseur (11) et le couvercle de circuit (38), et
dans lequel l'étape de réunion du couvercle de circuit (38) au boîtier du compresseur (11) inclut l'appui de l'élément commutateur (44A) contre le boîtier du compresseur (11).

11. Procédé d'assemblage selon la revendication 12, **caractérisé en ce que** l'étape de fixation du circuit d'entraînement du moteur (41) sur le couvercle de circuit (38) inclut la fixation du circuit d'entraînement du moteur (41) au couvercle de circuit (38), avec une attache (51, 52), de telle sorte que le circuit d'entraînement du moteur (41) soit empêché de se détacher du couvercle de circuit (38) et autorisé à se déplacer en direction du couvercle de circuit (38).

12. Procédé d'assemblage selon la revendication 10 ou 11, **caractérisé en ce qu'**il comprend en outre une étape d'agencement d'un support de carte de circuit imprimé (47) entre le couvercle de circuit (38) et la carte de circuit imprimé (43) pour régler une force avec laquelle l'élément commutateur (44A) appuie contre le boîtier du compresseur (11).

13. Procédé d'assemblage selon la revendication 12, dans lequel l'élément de support de la carte de circuit imprimé (47) est composé de résine, **caractérisé en ce que** l'étape d'agencement de l'élément de support de la carte de circuit imprimé (47) comprend
la fourniture de la résine pour l'élément de support de la carte de circuit imprimé entre le couvercle de circuit (38) et la carte de circuit imprimé (43) avant que la résine soit durcie ; et
la fixation de la carte de circuit imprimé (43) sur le couvercle de circuit (38) alors que la résine reste molle, de telle sorte que l'épaisseur de l'élément de support de la carte de circuit imprimé (47) entre le couvercle de circuit (38) et la carte de circuit imprimé (43) soit ajustée.

14. Procédé d'assemblage selon la revendication 12 ou 13, **caractérisé en ce que** l'étape d'agencement de l'élément de support de la carte de circuit imprimé (47) inclut l'agencement d'une entretoise (55) entre le couvercle de circuit (38) et la carte de circuit imprimé (43), dans lequel l'entretoise (55) est choisie parmi une pluralité d'entretoises ayant des épaisseurs différentes.
